# EUROPÄISCHE PATENTSCHRIFT

(11) **EP 2 188 320 B1**
(45) Veröffentlichungstag und Bekanntmachung des Hinweises auf die Patenterteilung: **14.05.2014**
(21) Anmeldenummer: 08862265.9
(22) Anmeldetag: 15.10.2008
(51) Int. Cl.: C08G 18/79, C09D 167/07, C09D 175/16, C14C 11/00, D06M 15/564, C08K 5/1515, C08K 5/19, C08K 5/50, C08L 67/07, C08L 75/16

(54) **DUAL CURE FORMULIERUNGEN MIT URETDIONGRUPPEN HALTIGEN KOMPONENTEN**
DUAL CURE FORMULATIONS WITH COMPONENTS COMPRISING URETDIONE GROUPS
FORMULATIONS A DOUBLE DURCISSEMENT AVEC DES COMPOSANTS CONTENANT DES GROUPES URETDIONE

(30) Priorität: 18.12.2007 DE 102007061012
(43) Veröffentlichungstag der Anmeldung: 26.05.2010
(73) Patentinhaber: Evonik Degussa GmbH, 45128 Essen (DE)
(72) Erfinder: SPYROU, Emmanouil, 46514 Schermbeck (DE); LOESCH, Holger, 44627 Herne (DE)
(86) Internationale Anmeldenummer: PCT/EP2008/063846
(87) Internationale Veröffentlichungsnummer: WO 2009/077222

(56) Entgegenhaltungen:
- EP-A- 1 524 283
- WO-A-03/016376
- WO-A-2005/085314
- US-A1- 2003 134 929

## Beschreibung

Die vorliegende Erfindung betrifft neue, thermisch und mit aktinischer Strahlung härtbare Formulierungen, Dual Cure Formulierungen genannt. Außerdem betrifft die vorliegende Erfindung die Verwendung der neuen thermisch und mit aktinischer Strahlung härtbaren Formulierungen für die Herstellung von pigmentierten und pigmentfreien Lacken sowie für Kleb- und Dichtstoffe.

Mit aktinischer Strahlung härtbare Formulierungen sind bekannt.

Ethylenische ungesättigte Prepolymere werden z. B. in P. K. T. Oldring (Hrsg.), "Chemistry and Technology of UV- and EB-Formulations for Coatings, Inks and Paints", Vol. II. SITA Technology, London 1991 beschrieben, beispielsweise auf Basis von Epoxyacrylaten (Seiten 31 bis 68), Urethanacrylaten (Seiten 73 bis 123) und Melaminacrylaten (Seiten 208 bis 214). Auch in der Patentliteratur finden solche Formulierungen häufig Erwähnung, exemplarisch seien genannt JP 62110779 und EP 947 565.

Die Beschichtung von metallischen Untergründen stellt ein besonderes Problem für Strahlen härtbare Formulierungen dar, da es aufgrund von Schrumpfungsprozessen zu einem Haftungsverlust kommen kann. Daher werden für solche Untergründe häufig phosphorsäurehaltige Haftvermittler eingesetzt. Beispiele dafür sind US 5,128,387 (Beschichtung von Bierdosen) und JP 2001172554 (Beschichtung von diversen Dosen).

Bekanntermaßen zeigen Epoxyacrylate eine hervorragende Haftung sowie einen guten Korrosionsschutz auf Metalluntergründen. Nachteil solcher Beschichtungen ist aber die geringe Verformbarkeit nach der Aushärtung. Für einige Beschichtungstechnologien, z. B. Coil-Coating ist die Verformbarkeit der beschichteten Werkstücke ohne Bildung von Rissen in der Beschichtung ausschlaggebend. Außerdem neigen solche Beschichtungen aufgrund ihrer aromatischen Anteile zum Vergilben.

WO 03/022945 beschreibt niederviskose Strahlen härtbare Formulierungen für Metalluntergründe auf Basis von Strahlen härtbaren Harzen, monofunktionellen Reaktivverdünnern und sauren Haftvermittlern. Die eingesetzten Harze sind dabei übliche, bei verschiedenen Anbietern erhältliche Verkaufsprodukte.

Auch EP 902 040 betrifft Strahlen härtbare Formulierungen. Darin werden Urethan(meth)acrylate mit monofunktionellen Estern einer ungesättigten Carbonsäure beschrieben, welche mit Alkoholen verestert sind, die einen Carbocyclus oder einen Heterocyclus enthalten.

Die aus dem Stand der Technik bekannten Systeme zeigen aber vielfach Nachteile, insbesondere die Aushärtung von dreidimensionalen Substraten in den Schattenzonen ist schwierig bis gar nicht zu bewerkstelligen.

Daher werden seit einiger Zeit Dual Cure Systeme propagiert, die neben der Härtung durch Strahlen noch andere Härtungsmethoden beinhalten. Z. B. WO2001/46286, WO200146285, WO2001/42329, WO2001/23453, WO2000/39183, EP1138710, EP1103572, EP1085065, EP928800. In diesen wird die Reaktion von Isocyanat-funktionalisierten Bindemittelbestandteilen mit hydroxyfunktionellen Komponenten beschrieben, die zu einer zusätzlichen Vernetzung führt.

Setzt man hierbei freie Isocyanate ein, wie z. B. in WO2001/46286 so resultiert dies in einer 2K-Formulierung mit beschränkter Topfzeit.

Werden dagegen extern blockierte Isocyanate (z. B. WO2001/23453) verwendet, so kommt es während der Aushärtungsreaktion zu einer Freisetzung von Blockierungsmittel in die Umwelt, welche aus ökologischen Gründen unerwünscht ist.

Die Verwendung von intern blockierten Isocyanaten (Uretdionen) in Dual Cure Systemen wird in WO 03/016376 beschrieben. Dort führt die Verwendung von uretdionhaltigen Komponenten zu einer verbesserten Zwischenhaftung, hat aber in den aufgeführten Beispielen keinen Einfluss auf Härte und Kratzfestigkeit der Beschichtung (Beispiele 3, 4 und V2). In keinem Beispiel wird die Performance der Beschichtung allein mit thermischer Aushärtung, ohne Strahlenhärtung (eine Simulation der Schattenbereiche also) wiedergegeben.

Aufgabe der vorliegenden Erfindung ist es, mit aktinischer Strahlung und thermisch härtbare Formulierungen zu entwickeln, die nach thermischer Aushärtung sowohl mit als auch ohne vorherige Strahlenhärtung eine Beschichtung, eine Verklebung oder eine Dichtung ergeben, die Minimalanforderungen erfüllt, also klebfrei, flexibel und chemikalienbeständig ist. Außerdem soll diese Formulierung aus Umweltschutzgründen frei von Blockierungsmitteln sein und unterhalb von 160 °C auszuhärten sein, um auch für temperaturempfindliche Substrate in Frage zu kommen.

Überraschend wurde gefunden, dass die erfindungsgemäßen Formulierungen die Aufgabenstellung erfüllen.

Gegenstand der vorliegenden Erfindung sind thermisch und Strahlen härtbare Formulierungen aus
A) mindestens 5 Gew.-% mindestens einer Strahlen härtbaren Komponente, wobei diese auch OH-Gruppen enthalten kann,
B) 10 bis 90 Gew.-% mindestens einer Uretdiongruppen haltigen Komponente, wobei diese auch OH-Gruppen und/oder Strahlen härtbare Gruppen enthält , C) 0,1 bis 5 Gew.-% mindestens einem Tetralkylammoniumsalz und/oder Phosphoniumsalz mit Halogenen, Hydroxiden, Alkoholaten oder organischen oder anorganischen Säureanionen als Gegenion,
und
0,1 bis 5 Gew.-% mindestens einem Co-Katalysator, ausgewählt aus
C1) mindestens einem Epoxid
   und/oder
C2) mindestens einem Metallacetylacetonat.

Außerdem können diese zusätzlich mindestens eine der folgenden Komponenten, allein oder in Mischungen enthalten:
D) 0,1 bis 10 Gew.-% mindestens eines Haftvermittlers,
E) 0,2 bis 10 Gew.-% mindestens eines Photoinitiators
F) 0,1 bis 10 Gew.-% mindestens einer Säure,
G) 1 bis 40 Gew.-% hydroxylgruppenhaltiger Oligomere und/oder Polymere und/oder Monomere,
H) 0,01 bis 50 Gew.-% mindestens eines Pigments und/oder sonstige Zuschlagstoffe,
I) 1 bis 70 Gew.-% mindestens eines Lösemittels.

Die erfindungsgemäßen thermisch und Strahlen härtbaren Formulierungen haben den Vorteil, dass sie bei der bestimmungsgemäßen Aushärtung mit aktinischer Strahlung und thermischer Energie ihre vollen Eigenschaften hinsichtlich Klebfreiheit, Flexibilität und Chemikalienbeständigkeit erhalten, aber auch dann Minimalanforderungen erfüllen, wenn allein thermisch ausgehärtet wird. Diese Minimalanforderungen sind Klebfreiheit, eine
Chemikalienbeständigkeit von mindestens 20 Doppelhüben und eine Erichsentiefung von mindestens 7 mm.

Ein wesentlicher Bestandteil der erfindungsgemäßen Formulierungen sind die Strahlen härtbaren Harze der Komponente A). Hierbei handelt es sich um für den Fachmann bekannte Systeme. Die Herstellung Strahlen härtbarer Harze, Oligomere und/oder Polymere, wird z. B. in "Radiation Curing in Polymer Science & Technology, Vol I: Fundamentals and Methods" von J. P. Fouassier, J. F. Rabek, Elsevier Applied Science, London und New York, 1993, Chapter 5, Seiten 226 bis 236, in "Lackharze", D. Stoye, W. Freitag, Hanser-Verlag, Wien, 1996 , Seite 85, 94-98, 169 und 265 und in der EP 947 565 beschrieben.

Je nach Rohstoffbasis können die Harze der Komponente A) beispielsweise Epoxyacrylate, Polyesteracrylate, Polyetheracrylate, Polyacrylatacrylate, und Urethanacrylate und/oder Polyesterurethanacrylate, allein oder in Mischungen, sein. Im Falle der Urethanacrylate können diese z. B. auf Polyestern oder aber auch auf Polyethern basieren. Auch die entsprechenden Methacrylate sind bekannt. Andere polymerisationsfähige Gruppen sind Epoxide und Vinylether. Auch diese können an verschiedenen Basisharzen angebunden sein. Es können auch OH-Gruppen enthalten sein, in einer Menge von 1 - 500 mg KOH/g.

Für A) kommen auch flüssige Strahlen härtbare Komponenten, sogenannte Reaktivverdünner in Frage.

Strahlen härtbare Reaktivverdünner A) und ihre Herstellung werden z. B. in "Radiation Curing in Polymer Science & Technology, Vol I: Fundamentals and Methods" von J. P. Fouassier, J. F. Rabek , Elsevier Applied Science, London und New York, 1993, Chapter 5, Seiten 237 bis 240 beschrieben. Es handelt sich dabei in der Regel um Acrylat oder Methacrylat haltige Stoffe, die bei Raumtemperatur flüssig und damit in der Lage sind, die Gesamtviskosität der Formulierung herabzusetzen. Beispiele für solche Produkte sind insbesondere Isobornylacrylat, Hydroxypropylmethacrylat, Trimethylolpropanmonoformalacrylat, Tetrahydrofurfurylacrylat, Phenoxyethylacrylat Trimethylenpropantriacrylat, Dipropylenglycoldiacrylat, Tripropylenglycoldiacrylat, Hexandioldiacrylat, Pentaerythrittetraacrylat, Laurylacrylat sowie propoxilierte oder ethoxilierte Varianten dieser Reaktivverdünner und/oder urethanisierte Reaktivverdünner wie EBECRYL 1039 (Cytec), und andere. Außerdem in Frage kommen auch andere flüssige Komponenten, die in der Lage sind, unter Bedingungen der radikalischen Polymerisation mit z. B. Vinylether oder Allylether zu reagieren.

Die Menge A) in der Formulierung variiert von 5 bis 90 Gew.-%, bevorzugt 10 bis 50 Gew.-%, bezogen auf die Gesamtformulierung. Besonders bevorzugt sind Polyesterurethanacrylate. Beispiele dafür sind VESTICOAT EP 110 IBOA (Handelsprodukt der Evonik Degussa GmbH, Deutschland, Coatings & Colorants, Difunktionelles Polyesterurethanacrylat) und EBECRYL 1256 (Handelsprodukt von Cytec). Besonders bevorzugt werden auch monofunktionelle Reaktivverdünner, insbesondere Isobornylacrylat und/oder Trimethylolpropanmonoformalacrylat.

Uretdiongruppen enthaltende Polyisocyanate sind wohlbekannt und werden beispielsweise in US 4 476 054, US 4 912 210, US 4 929 724 sowie EP 0 417 603 beschrieben. Einen umfassenden Überblick über industriell relevante Verfahren zur Dimerisierung von Isocyanaten zu Uretdionen liefert das J. Prakt. Chem. 336 (1994) 185-200. Im Allgemeinen erfolgt die Umsetzung von Isocyanaten zu Uretdionen in Gegenwart löslicher Dimerisierungskatalysatoren, wie z. B. Dialkylaminopyridinen, Trialkylphosphinen, Phosphorigsäuretriamiden, Triazolderivaten oder imididazolen. Die Reaktion - optional in Lösemitteln, bevorzugt aber in Abwesenheit von Lösemitteln durchgeführt - wird bei Erreichen eines gewünschten Umsatzes durch Zusatz von Katalysatorgiften abgestoppt. Überschüssiges monomeres Isocyanat wird im Anschluss durch Kurzwegverdampfung abgetrennt. Ist der Katalysator flüchtig genug, kann das Reaktionsgemisch im Zuge der Monomerabtrennung vom Katalysator befreit werden. Auf den Zusatz von Katalysatorgiften kann in diesem Fall verzichtet werden. Grundsätzlich ist zur Herstellung von Uretdiongruppen enthaltenden Polyisocyanaten eine breite Palette von Isocyanaten geeignet. Erfindungsgemäß werden Isophorondiisocyanat (IPDI), Hexamethylendiisocyanat (HDI), Diisocyanatodicyclohexylmethan (H₁₂MDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI), Methylendiphenyldiisocyanat (MDI), Toluidindiisocyanat (TDI) und Tetramethylxylylendiisocyanat (TMXDI) bevorzugt verwendet. Ganz besonders bevorzugt werden IPDI, HDI und H₁₂MDI.

Die Umsetzung dieser Uretdiongruppen tragenden Polyisocyanate zu der Uretdiongruppen aufweisenden Komponente B) beinhaltet die Reaktion der freien NCO-Gruppen mit hydroxylgruppenhaltigen Monomeren oder Polymeren, wie z. B. Polyestern, Polythioethern, Polyethern, Polycaprolactamen, Polyepoxiden, Polyesteramiden, Polyurethanen oder niedermolekularen Di-, Tri- und/oder Tetraalkoholen als Kettenverlängerer und gegebenenfalls Monoaminen und/oder Monoalkoholen als Kettenabbrecher und wurde schon häufig beschrieben (EP 0 669 353, EP 0 669 354, DE 30 30 572, EP 0 639 598 oder EP 0 803 524). Bevorzugt werden Polyester und monomere Dialkohole. Bevorzugte Uretdiongruppen aufweisende Komponenten B) (Härter) haben einen freien NCO-Gehalt von weniger als 5 Gew.-% und einen Gehalt an Uretdiongruppen von 1 bis 25 Gew.-% (berechnet als C₂N₂O₂, Molekulargewicht 84). Außer den Uretdiongruppen kann die Uretdiongruppen aufweisende Komponente B) auch Isocyanurat-, Biuret-, Allophanat-, Urethan- und/oder Harnstoff-Strukturen aufweisen. Kommerziell erhältliche Beispiele für solche Uretdiongruppen haltigen Komponenten B) (Härter) sind VESTAGON BF 1320, VESTAGON, BF 1540 und VESTAGON BF 9030 von Evonik Degussa GmbH.

Die Uretdiongruppen aufweisende Komponente B) enthält auch OH-Gruppen und/oder Strahlen härtbare Gruppen. Setzt man Uretdiongruppen haltige Isocyanate mit einem Überschuss an Diolen um, so resultieren daraus OH-Gruppen haltige Uretdiongruppen enthaltende Produkte. Setzt man hingegen in der gleichen Reaktion Stoffe ein, die sowohl gegenüber Isocyanate reaktive Gruppen tragen als auch radikalisch polymerisierbare Funktionalitäten (z. B. Hydroxyethylacrylat), so erhält man, ein Uretdiongruppen haltiges Produkt mit zusätzlichen Strahlen härtbaren Gruppen.

Der Anteil an Uretdiongruppen haltiger Komponente B) kann von 10 bis 90 Gew.-% betragen, bevorzugt von 20 bis 50 Gew.-%, bezogen auf die Gesamtformulierung.

Als Katalysatoren unter C) werden Tetralkylammoniumsalze und/oder Phosphoniumsalze mit Halogenen, Hydroxiden, Alkoholaten oder organischen oder anorganischen Säureanionen als Gegenion, eingesetzt. Beispiele dafür sind:
Tetramethylammoniumformiat, Tetramethylammoniumacetat, Tetramethylammoniumpropionat, Tetramethylammoniumbutyrat, Tetramethylammonium-benzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat, Tetrabutylammoniumformiat, Tetrabutylammoniumacetat, Tetrabutylammoniumpropionat, Tetrabutylammoniumbutyrat und Tetrabutylammoniumbenzoat und Tetrabutylphosphoniumacetat, Tetrabutylphosphoniumformiat und Ethyltriphenylphosphoniumacetat, Tetrabutylphosphoniumbenzotriazolat, Tetraphenylphosphoniumphenolat und Trihexyltetradecylphosphoniumdecanoat, Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecyl-ammoniumhydroxid, Benzyltrimethylammoniumhydroxid, Benzyltriethylammoniumhydroxid, Tri-methylphenylammoniumhydroxid, Triethylmethylammoniumhydroxid, Tri-methylvinylammoniumhydroxid, Methyltributylammoniummethanolat, Methyltriethylammoniummethanolat, Tetramethylammoniummethanolat, Tetraethylammoniummethanolat, Tetrapropylammoniummethanolat, Tetrabutylammoniummethanolat, Tetrapentylammoniummethanolat, Tetrahexylammoniummethanolat, Tetraoctylammoniummethanolat, Tetradecylammoniummethanolat, Tetradecyltrihexylammoniummethanolat, Tetraoctadecylammoniummethanolat, Benzyltrimethylammoniummethanolat, Benzyltriethylammoniummethanolat, Trimethylphenylammoniummethanolat, Triethylmethylammoniummethanolat, Trimethylvinylammoniummethanolat, Methyltributylammoniumethanolat, Methyltriethylammoniumethanolat, Tetramethylammoniumethanolat, Tetraethylammoniumethanolat, Tetrapropylammoniumethanolat, Tetrabutylammoniumethanolat, Tetrapentylammoniumethanolat, Tetrahexylammoniumethanolat, Tetraoctylammoniummethanolat, Tetradecylammoniumethanolat, Tetradecyltrihexylammoniumethanolat, Tetraoctadecylammoniumethanolat, Benzyltrimethylammoniumethanolat, Benzyltriethylammoniumethanolat, Tri-methylphenylammoniumethanolat, Triethylmethylammoniumethanolat, Tri-methylvinylammoniumethanolat, Methyltributylammoniumbenzylat, Methyltriethylammoniumbenzylat, Tetramethylammoniumbenzylat, Tetraethylammoniumbenzylat, Tetrapropylammoniumbenzylat, Tetrabutylammoniumbenzylat, Tetrapentylammoniumbenzylat, Tetrahexylammoniumbenzylat, Tetraoctylammoniumbenzylat, Tetradecylammoniumbenzylat, Tetradecyltrihexylammoniumbenzylat, Tetraoctadecylammoniumbenzylat, Benzyltrimethylammoniumbenzylat, Benzyltriethylammoniumbenzylat, Trimethylphenylammoniumbenzylat, Triethylmethylammoniumbenzylat, Trimethylvinylammoniumbenzylat, Tetramethylammoniumfluorid, Tetraethylammoniumfluorid, Tetrabutylammoniumfluorid, Tetraoctylammoniumfluorid, Benzyltrimethylammoniumfluorid, Tetrabutylphosphoniumhydroxid, Tetrabutylphosphoniumfluorid, Tetrabutylammoniumchlorid, Tetrabutylammoniumbromid, Tetrabutylammoniumiodid, Tetraethylammoniumchlorid, Tetraethylammoniumbromid, Tetraethylammoniumiodid, Tetramethylammoniumchlorid, Tetramethylammoniumbromid, Tetramethylammoniumiodid, Benzyltrimethylammoniumchlorid, Benzyltriethylammoniumchlorid, Benzyltripropylammoniumchlorid, Benzyltributylammoniumchlorid, Methyltributylammoniumchlorid, Methyltripropylammoniumchlorid, Methyltriethylammoniumchlorid, Methyltriphenylammoniumchlorid, Phenyltrimethylammoniumchlorid, Benzyltrimethylammoniumbromid, Benzyltriethylammoniumbromid, Benzyltripropylammoniumbromid, Benzyltributylammoniumbromid, Methyltributylammoniumbromid, Methyltripropylammoniumbromid, Methyltriethylammoniumbromid, Methyltriphenylammoniumbromid, Phenyltrimethylammoniumbromid, Benzyltrimethylammoniumiodid, Benzyltriethylammoniumiodid, Benzyltripropylammoniumiodid, Benzyltributylammoniumiodid, Methyltributylammoniumiodid, Methyltripropylammoniumiodid, Methyltriethylammoniumiodid, Methyltriphenylammoniumiodid und Phenyltrimethylammoniumiodid, Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecylammoniumhydroxid, Benzyltrimethylamrnoniumhydroxid, Benzyltriethylammoniumhydroxid, Trimethylphenylammoniumhydroxid, Triethylmethylammoniumhydroxid, Trimethylvinylammoniumhydroxid, Tetramethylamrnoniumfluorid, Tetraethylammoniumfluorid, Tetrabutylammoniumfluorid, Tetraoctylammoniumfluorid und Benzyltrimethylammoniumfluorid. Diese Katalysatoren können allein oder in Mischungen zugesetzt werden. Sie können auch verkapselt oder polymer angebunden sein. Bevorzugt werden Tetraethylammoniumbenzoat und Tetrabutylammoniumhydroxid verwendet.

Der Anteil an Katalysatoren C) kann 0,1 bis 5 Gew.-% betragen, bevorzugt von 0,3 bis 2 Gew.-%, bezogen auf die Gesamtformulierung.

Als Co-Katalysatoren C1) werden Epoxide eingesetzt. In Frage kommen dabei z. B. Glycidylether und Glycidylester, aliphatische Epoxide, Diglycidylether auf Basis Bisphenol A und Glycidylmethacrylate. Beispiele für solche Epoxide sind Triglycidylisocyanurat (TGIC, Handelsname ARALDITE 810, Huntsman), Gemische aus Terephthalsäurediglycidylester und Trimellitsäuretriglycidylester (Handelsname ARALDITE PT 910 und 912, Huntsman), Glycidylester der Versaticsäure (Handelsname KARDURA E10, Shell), 3,4-Epoxycyclohexylmethyl-3',4'-epoxycyclohexancarboxylat (ECC), Diglycidylether auf Basis Bisphenol A (Handelsname EPIKOTE 828, Shell) Ethylhexylglycidylether, Butylglycidylether, Pentaerythrittetraglycidylether, (Handelsname POLYPOX R 16, UPPC AG) sowie andere Polypoxtypen mit freien Epoxygruppen. Es können auch Mischungen eingesetzt werden. Bevorzugt werden verwendet ARALDITE PT 910 und 912 eingesetzt.

Als Co-Katalysatoren C2) kommen ausserdem in Frage Metallacetylacetonate. Beispiele dafür sind Zinkacetylacetonat, Lithiumacetylacetonat und Zinnacetylacetonat, allein oder in Mischungen. Bevorzugt wird Zinkacetylacetonat eingesetzt.

Der Anteil an Co-Katalysatoren C1) und /oder C2) kann von 0,1 bis 5 Gew.-% betragen, bevorzugt von 0,3 bis 2 Gew.-%, bezogen auf die Gesamtformulierung.

Optional können die erfindungsgemäßen Formulierungen Haftvermittler D) enthalten. In der Regel bestehen Haftvermittler für Strahlen härtbare Formulierungen für metallische Untergründe aus Phosphorsäure und/oder Phosphonsäure und/oder deren Umsetzungsprodukten (z. B. Ester) mit funktionalisierten Acrylaten. Während die freien Phosphorsäuregruppen für die direkte Haftung auf dem Metall verantwortlich sind, sorgen die Acrylatgruppen für einen Verbund mit der Beschichtungsmatrix. Solche Produkte werden beispielsweise beschrieben in WO 01/98413, in JP 08231564, und in JP 06313127, deren Offenbarung hiermit unter Bezugnahme mit eingeschlossen ist.

Typische Handelsprodukte sind EBECRYL 168, 169 und 170 von Cytec, ALDITOL Vxl 6219 von VIANOVA, CD 9050 und CD 9052 von Sartomer, SIPOMER PAM-100, SIPOMER PAM-200 und SIPOMER PAM-300 von Rhodia und GENORAD 40 von Rahn.

Die Menge an D) in der Formulierung beträgt 0,1 bis 10 Gew.-%, bevorzugt von 1 bis 5 Gew.-%, bezogen auf die Gesamtformulierung, falls vorhanden.

Ebenfalls in den erfindungsgemäßen Formulierungen können Photoinitiatoren E) enthalten sein. Geeignete Photoinitiatoren und ihre Herstellung werden z. B. in "Radiation Curing in Polymer Science & Technology, Vol II: Photoinitiating Systems" von J. P. Fouassier, J. F. Rabek , Elsevier Applied Science, London und New York, 1993 beschrieben. Häufig handelt es sich hierbei um α-Hydroxyketone bzw. Derivate dieser. Die Photoinitiatoren können, falls vorhanden, in Mengen von 0,2 bis 10 Gew.-%, bezogen auf die Gesamtformulierung, enthalten sein. Geeignete Photoinitiatoren sind unter den Handelsnamen LUCERIN (BASF), IRGACURE und DAROCUR (Ciba) erhältlich.

Säuren, die unter F) genannt werden, sind alle Stoffe, fest oder flüssig, organisch oder anorganisch, monomer oder polymer, die die Eigenschaften einer Brönstedt- oder einer Lewissäure besitzen. Als Beispiele seien genannt: Schwefelsäure, Essigsäure, Benzoesäure, Malonsäure, Terephthalsäure, Phtalsäure, aber auch Copolyester oder Copolyamide mit einer Säurezahl von mindestens 20.

Solche Säuren F) können, falls vorhanden, in Mengen von 0,1 bis 10 Gew.-% bezogen auf die Gesamtformulierung, enthalten sein.

Bei den Hydroxylgruppen haltigen Oligomeren oder Polymeren G) werden bevorzugt Polyester, Polyether, Polyacrylate, Polyurethaneund/oder Polycarbonate mit einer OH-Zahl von 20 bis 500 (in mg KOH/Gramm) und einer mittleren Molmasse von 250 bis 6000 g/Mol eingesetzt. Diese Polymere können amorph oder teil-kristallin sein. Besonders bevorzugt werden Hydroxylgruppen haltige Polyester mit einer OH-Zahl von 20 bis 150 und einem mittleren Molekulargewicht von 500 bis 6 000 g/mol. Selbstverständlich können auch Mischungen solcher Polymere eingesetzt werden.

Als Polymer G) werden bevorzugt Polyester eingesetzt. Die für die Herstellung dieser Polyester bevorzugten Carbonsäuren können aliphatischer, cycloaliphatischer, aromatischer und/oder heterocyclischer Natur sein und gegebenenfalls durch Halogenatome substituiert und/oder ungesättigt sein. Als Beispiele hierfür seien genannt: Bernstein-, Adipin-, Kork-, Azelain-, Sebacin-, Phthal-, Terephthal-, Isophthal-, Trimellit-, Pyromellit-, Tetrahydrophthal-, Hexahydrophthal-,-Hexahydroterephthal-, Di- und Tetrachlorphthal-, Endomethylentetrahydrophthal-, Glutar-, Malein- und Fumarsäure bzw. - so weit zugänglich - deren Anhydride, Terephthalsäuredimethylester, Terephthalsäurebis-glykolester, weiterhin cyclische Monocarbonsäure, wie Benzoesäure, p-tert.-Butylbenzoesäure oder Hexahydrobenzoesäure.

Als mehrwertige Alkohole kommen z. B. Ethylenglykol, 1,2- und 1,3-Propylenglykol, 1,4- und 2,3-Butylenglykol, Di-ß-hydroxyethylbutandiol, 1,6-Hexandiol, 1,8-Octandiol, Neopentylglykol, Cyclohexandiol, Bis-(1,4-hydroxymethyl)-propan, 2-Methylpropandiol-1,3, 2-Methylpentandiol-1,5, 2,2,4(2,4,4)-Trimethyl-hexandiol-1,6, Glycerin, Trimethylolpropan, Trimethylolethan, Hexantriol-1,2,6, Butantriol-1,2,4, Tris-(ß-hydroxyethyl)-isocyanurat, Pentaerythrit, Mannit und Sorbit sowie Diethylenglykol, Triethylenglykol, Tetraethylenglykol, Dipropylenglykol, Polypropylenglykol, Polybutylenglykol, Xylylenglykol und Hydroxypivalinsäureneopentylglykolester zur Herstellung des Polyesters G) infrage.

Auch Mono- und Polyester aus Lactonen, z. B. ε-Caprolacton oder Hydroxycarbonsäuren, z. B. Hydroxypivalinsäure, ε-Hydroxydecansäure, ε-Hydroxycapronsäure, Thioglykolsäure, können als Ausgangsstoffe für die Herstellung der Polymere G) eingesetzt werden. Polyester aus den oben (S. 6) genannten Polycarbonsäuren bzw. deren Derivaten und Polyphenolen, die Hydrochinon, Bisphenol-A, 4,4'-Dihydroxybiphenyl oder Bis-(4-hydroxyphenyl)-sulfon; Polyester der Kohlensäure, die aus Hydrochinon, Diphenylolpropan, p-Xylylenglykol, Ethylenglykol, Butandiol oder Hexandiol-1,6 und anderen Polyolen durch übliche Kondensationsreaktionen, z. B. mit Phosgen oder Diethyl- bzw. Diphenylcarbonat, oder aus cyclischen Carbonaten, wie Glykolcarbonat oder Vinylidencarbonat, durch Polymerisation in bekannter Weise erhältlich sind; Polyester der Kieselsäure, Polyester der Phosphorsäure, z. B. aus Methan-, Ethan-, ß-Chlorethan-, Benzol- oder Styrolphosphorsäure oder deren Derivate, wie z.B., Phosphorsäurechloride oder Phosphorsäureester und Polyalkoholen oder Polyphenolen der oben genannten Art; Polyester der Borsäure; Polysiloxane, wie z. B. die durch Hydrolyse von Dialkyldichlorsilanen mit Wasser und nachfolgende Behandlung mit Polyalkoholen, die durch Anlagerung von Polysiloxandihydriden an Olefinen, wie Allylalkohol oder Acrylsäure, erhältlichen Produkte, sind geeignet als Ausgangsstoffe für die Herstellung des Polymers G).

Bevorzugte Polyester G) sind auch die Reaktionsprodukte von Polycarbonsäuren und Glycidverbindungen, wie sie z. B. in der DE-OS 24 10 513 beschrieben sind.

Beispiele für Glycidylverbindungen, die verwendet werden können, sind Ester des 2,3-Epoxy-1-propanols mit monobasischen Säuren, die 4 bis 18 Kohlenstoffatome haben, wie Glycidylpalmitat, Glycidyllaurat und Glycidylstearat, Alkylenoxide mit 4 bis 18 Kohlenstoffatomen, wie Butylenoxid, und Glycidylether, wie Octylglycidylether.

Die Polyester G) können auf an sich bekannte Weise durch Kondensation in einer Inertgasatmosphäre bei Temperaturen von 100 bis 260 °C, vorzugsweise 130 bis 220 °C, in der Schmelze oder in azeotroper Fahrweise gewonnen werden, wie es z. B. in Methoden der Organischen Chemie (Houben-Weyl); Band 14/2, Seiten 1 bis 5, 21 bis 23, 40 bis 44, Georg Thieme Verlag, Stuttgart, 1963, oder bei C. R. Martens, Alkyd Resins, Seiten 51 bis 59, Reinhold Plastics Appl. Series, Reinhold Publishing Comp., New York, 1961, beschrieben ist.

Als Polymere G) kommen außerdem hydroxyfunktionelle Polyether und Polycarbonate in Betracht. Bevorzugte Polyether können z. B. durch Polyaddition von Epoxiden, wie Ethylenoxid, Propylenoxid, Butylenoxid, Trimethylenoxid, 3,3-Bis-(chlormethyl)oxabicyclobutan, Tetrahydrofuran, Styroloxid oder dem Bis-(2,5)-epoxypropylether des Diphenylolpropans, durch kationische Polymerisation in Gegenwart von Lewissäuren, wie z. B. Bortrifluorid, oder durch anionische Polymerisation mit Alkalihydroxiden oder Alkalialkoholaten oder durch Anlagerung dieser Epoxide, gegebenenfalls im Gemisch oder nacheinander, an Startkomponenten mit reaktionsfähigen Wasserstoffatomen, wie Alkohole und/oder Amine, und/oder Wasser, insbesondere Ethylenglykol, Polypropylenglykol-(1,3)oder-(1,2), Pentamethylenglykol, Hexandiol, Decamethylenglykol, Trimethylolpropan, Glycerin, Anilin, Ammoniak, Ethanolamin, Ethylendiamin, Di-(ß-hydroxypropyl)-methylamin sowie hydroxyalkylierte Phenole, wie z. B. Di-(ß-hydroxyethoxy)-resorcin, hergestellt werden.

Beispielhaft genannte Polymere G), die Carbonatgruppen aufweisen, also Polycarbonate, können bekanntermaßen durch Umsetzung von zweiwertigen oder dreiwertigen Alkohole des Molekulargewichtsbereichs 62 bis 300 g/mol mit Diarylcarbonaten, wie z. B. Diphenylcarbonat, Phosgen oder bevorzugt cyclischen Carbonaten, wie z. B. Trimethylencarbonat oder 2,2-Dimethyltrimethylencarbonat (NPC) oder Gemischen solcher cyclischen Carbonate erhalten werden. Besonders bevorzugte Carbonatdiole sind solche, die aus den genannten zweiwertigen Alkoholen als Startermoleküle und NPC unter Ringöffnung hergestellt werden können.

Als Polymere G) sind auch z. B. die in der Polyurethanchemie an sich bekannten Polythioether, Polyacetale, Polyepoxide, Polyesteramide oder Polyurethane des Molekulargewichtsbereichs 250 bis 8500 g/mol, welche gegenüber Isocyanatgruppen reaktionsfähige Hydroxylgruppen aufweisen, geeignet.

Selbstverständlich können auch Mischungen der vorgenannten Polymere G) verwendet werden.

Als monomere Alkohole G) eignen sich Mono-, Di- und/oder Polyole des Molekulargewichts von mindestens 32 g/mol.

Beispielsweise handelt es sich bei den Monoalkoholen um Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole sowie Hydroxymethylcyclohexan.

Bei den Diolen handelt es sich beispielweise um Ethylenglykol, Triethylenglykol, Butandiol-1,4, Pentandiol-1,5, Hexandiol-1,6, 3-Methylpentandiol-1,5, Neopentylglykol, 2,2,4 (2,4,4)-Trimethylhexandiol sowie Hydroxypivalinsäureneopentylglykolester.

Bei den Triolen handelt es sich beispielweise um Trimethylolpropan, Ditrimethylolpropan, Trimethylolethan, Hexantriol-1,2,6, Butantriol-1,2,4, Tris(β-Hydroxyethyl)-isocyanurat, Pentaerythrit, Mannit oder Sorbit.

Die Menge an G), bezogen auf die Gesamtformulierung, kann zwischen 0,1 und 40 Gew.-% betragen, falls vorhanden.

Geeignete Pigmente H) für die Strahlen härtbaren Formulierungen gemäß der vorliegenden Erfindung werden, z. B. in "Radiation Curing in Polymer Science & Technology, Vol IV: Practical Aspects and Application" von J. P. Fouassier, J. F. Rabek , Elsevier Applied Science, London und New York, 1993, Chapter 5, Seiten 87 bis 105 beschrieben und können in Mengen von 1 bis 40 Gew.-% enthalten sein. Beispiele für Korrosionsschutzpigmente findet man z. B. in Pigment + Füllstoff Tabellen, O. Lückert, Vincentz Verlag Hannover, 6. Auflage 2002. Beispielhaft seien genannt: SHIELDEX C 303 (Grace Davison) und HALOX Coil X 100, HALOX Coil X 200 und HALOX CW 491 (Erbslöh), HEUCOPHOS SAPP oder auch ZPA (Heubach), K-White TC 720 (Tayca) und HOMBICOR (Sachtleben). Natürlich kommen auch einfache anorganische Salze wie z. B. Zinkphosphat oder auch farbgebende Pigmente in Betracht. Die Menge an solchen Pigmenten variiert von 1 bis 50 Gew.-%, bezogen auf die Gesamtformulierung, falls vorhanden.

Sonstige Zuschlagstoffe H) für die Strahlen härtbaren Formulierungen gibt es in verschiedenen Zusammensetzungen und für diverse Zwecke, z. B. Verlaufsmittel, Mattierungsmittel, Entgasungsmittel, Farbstoffe und andere.

Einige von ihnen werden beschrieben in der Broschüre "SELECTED DEGUSSA PRODUCTS FOR RADIATION CURING AND PRINTING INKS", herausgegeben von der Tego Coating & Ink Additives, Essen, 2003. Die Menge an solchen Additiven variiert von 0,01 bis 5 Gew.-%, bezogen auf die Gesamtformulierung, falls vorhanden.

Als Lösemittel 1) kommen alle unter den Reaktionsbedingungen inerten organischen und anorganischen Flüssigkeiten in Frage. Als Beispiele seien genannt Aceton, Ethylacetat, Butylacetat, Xylol, Solvesso 100, Solvesso 150, Methoxypropylacetat und Dibasicester und Wasser.

Die Menge an Lösemittel beträgt 1-70 Gew.-% bezogen auf die Gesamtformulierung, falls vorhanden.

Die Homogenisierung aller Bestandteile zur Herstellung der erfindungsgemäßen Zusammensetzung kann in geeigneten Aggregaten, wie z. B. beheizbaren Rührkesseln, Knetern oder auch Extrudern, erfolgen, wobei Temperaturobergrenzen von 120 bis 130 °C nicht überschritten werden sollten. Die gut vermischte Masse wird durch geeignete Auftragung, (z. B. Walzen, Sprühen, Spritzen, Tauchen) auf das Substrat aufgebracht. Nach dem Auftrag werden die beschichteten Werkstücke zur Aushärtung in Anwesenheit von Photoinitiatoren unter eine UV Lampe (mit oder ohne Schutzgas) oder ohne Photoinitiatoren unter einem Elektronenstrahlhärter (ESH) geführt, und danach 4 bis 60 Minuten auf eine Temperatur von 60 bis 220 °C, vorzugsweise 6 bis 30 Minuten bei 80 bis 160 °C erhitzt. Grundsätzlich ist auch die umgekehrte Aushärtungsreihenfolge denkbar.

Als Vergleichsversuch wird die gleiche thermische Aushärtung ohne vorherige Strahlenhärtung durchgeführt.

UV-Härtung, UV-Lampen werden z. B. beschrieben in "Radiation Curing in Polymer Science & Technology, Vol I: Fundamentals and Methods" von J. P. Fouassier, J. F. Rabek, Elsevier Applied Science, London und New York, 1993, Chapter 8, Seiten 453 bis 503.

Elektronenstrahlhärtung und -härter werden z. B. beschrieben in "Radiation Curing in Polymer Science & Technology, Vol I: Fundamentals and Methods" von J. P. Fouassier, J. F. Rabek, Elsevier Applied Science, London und New York, 1993, Chapter 4, Seiten 193 bis 225 und in Chapter 9, Seiten 503 bis 555.

Ein weiterer Gegenstand der vorliegenden Erfindung ist die Verwendung der erfindungsgemäßen thermisch und Strahlen härtbaren Formulierungen als Beschichtungsmittel, insbesondere als Primer, Zwischenschicht, Decklack, Klarlack, Klebstoff oder Dichtmaterial sowie die Beschichtungsmittel selbst.

Gegenstand der Erfindung ist auch die Verwendung der erfindungsgemäßen thermisch und Strahlen härtbaren Formulierungen zur Herstellung von flüssigen und pulverförmigen Lackbeschichtungen auf Metall-, Kunststoff-, Glas-, Holz-, oder Ledersubstraten oder sonstigen hitzeresistenten Untergründen. Gegenstand der Erfindung ist auch die Verwendung der erfindungsgemäßen thermisch und Strahlen härtbaren Formulierungen als Klebstoffzusammensetzungen für Verklebungen von Metall-, Kunststoff-, Glas-, Holz-, Textil-, oder Ledersubstraten oder sonstigen hitzeresistenten Untergründen.

Ebenfalls Gegenstand der Erfindung sind Metallbeschichtungszusammensetzungen, insbesondere für Automobilkarossen, Motor- und Fahrräder, Gebäudeteile und Haushaltsgeräte, Holzbeschichtungszusammensetzungen, Glasbeschichtungszusammensetzungen, Textilbeschichtungszusammensetzungen Lederbeschichtungszusammensetzungen und Kunststoffbeschichtungszusammensetzungen.

Die Beschichtung kann entweder allein verwendet werden, oder eine Schicht eines Mehrschichtaufbaus sein. Sie kann beispielsweise als Primer, als Zwischenschicht oder als Deck- oder Klarlack aufgetragen sein. Die über oder unter der Beschichtung liegenden Schichten können entweder konventionell thermisch ausgehärtet werden, oder aber auch durch Strahlung.

Nachfolgend wird die vorliegende Erfindung anhand von Beispielen näher erläutert. Alternative Ausführungsformen der vorliegenden Erfindung sind in analoger Weise erhältlich.

### Beispiele:

| **Einsatzstoffe** | **Produktbeschreibung, Hersteller** |
|---|---|
| IPDI | Isophorondiisocyanat, Evonik Degussa GmbH, Coatings & Colorants |
| IPDI-Uretdion | Uretdion auf Basis IPDI, Evonik Degussa GmbH, Coatings & Colorants, Freier NCO-Gehalt 17,2 %, Gesamt-NCO 36 % |
| Dynapol R 110 | Strahlenhärtbares Harz (Urethanacrylat) in 25% Isobornylacrylat, Evonik Degussa GmbH, Coatings & Colorants (A) |
| VESTAGON EP BF 9030 | Härter, Uretdion-Gehalt: 11,5-13,0 %, Schmp.: 74-75 °C, T_{G}: 40 - 50 °C, Evonik Degussa GmbH, Coatings & Colorants (B) |
| HEA | Hydroxyethylacrylat, Evonik Degussa GmbH |
| LAROMER 8887 | Trimethylolpropanmonoformalacrylat, BASF, monofunktioneller Reaktivverdünner (A) |
| IRGACURE 184 | Photoinitiator, Ciba (E) |
| ARALDITE PT 912 | Co-Katalysator, Glycidylester, Huntsman (C1) |
| Zinkacetylacetonat | Co-Katalysator, Aldrich (C2) |
| TEAB | Tetraethylammoniumbenzoat, RSA Corp. (C) |
| DBTL | Dibutylzinndilaurat, Katalysator, Aldrich |

### A) Herstellung des Strahlen härtbaren Harzes

### A1) Polyesterherstellung

Adipinsäure (292 g) und Butandiol (295 g) werden in einem 2 I-Kolben mit Destillationsaufsatz im Stickstoffstrom aufgeschmolzen. Bei Erreichen einer Temperatur von 160 °C beginnt Wasser abzudestillieren. Innerhalb von einer Stunde wird die Temperatur sukzessive auf 220 °C erhöht. Nach vier weiteren Stunden bei dieser Temperatur verlangsamt sich die Wasserabspaltung. 200 mg FASCAT 4102 (Umesterungskatalysator der Fa. Arkema) werden eingerührt und im Vakuum weiter gearbeitet, welches im Verlauf der Reaktion so angepasst wird, dass immer noch Destillat anfällt. Nach Erreichen einer Hydroxylzahl von 250 mg KOH/g (Methode DIN 53240-2) und einer Säurezahl von 0,6 mg KOH/g (Methode DIN EN ISO 2114) wird abgestellt. Viskosität (80 °C): 41 mPas.

### A2) Acrylierung von A1

Zu 222 g IPDI werden 139 g HEA und 224 g des Polyesters A1 gegeben. Nach Zugabe von 0,7 g IONOL CP und 0,1 g DBTL wird unter Rühren auf 60 °C aufgeheizt und dann 5 h bei dieser Temperatur gerührt. Die NCO-Zahl ist danach auf <0,1 % gesunken.

### B) Herstellung der Uretdion haltigen Komponente

408 g IPDI Uretdion (freie NCO-Zahl 17,2 %) wird in 500 ml Ethylacetat gelöst und mit 72 g Hexandiol und 71 g HEA versetzt. Nach Zugabe von 0,3 g lonol CP und 0,1 g DBTL wird auf 60 °C aufgeheizt und nach 5 h abgekühlt. Der freie NCO-Gehalt ist auf < 0,1 % gesunken. Das Lösemittel wird am Rotationsverdampfer abgezogen, es resultiert ein weißer kristalliner Feststoff.

### C) Formulierungen

Alle Angaben in Gew.-% sind bezogen auf das Gesamtgewicht der Formulierung

| **Versuch/Komponente** | **1** | **2*** | **3** | **4*** | **5** |
|---|---|---|---|---|---|
| Dynapol R 110 (A) | | | 32 | 33 | 32 |
| VESTAGON BF 9030 (B) | | | 33 | 33 | 33 |
| Strahlen härtbares Harz (A) | 30 | 30 | | | |
| LAROMER 8887 (A) | 40 | 42 | 33 | 34 | 33 |
| Uretdionkomponente (B) | 20 | 20 | | | |
| IRGACURE 184 (E) | 8 | 8 | - | | |
| TEAB (C) | 1 | - | 1 | | 1 |
| Zinkacetylacetonat (C2) | | | | | 1 |
| ARALDITE PT 912 (C1) | 1 | - | 1 | | |

| | | | | | |
|---|---|---|---|---|---|
| *nicht erfindungsgemäße Vergleichsbeispiele | | | | | |

### D) Ergebnisse

### Allgemeine Herstellvorschrift zur Formulierung und Aushärtung von UV-Lacken

Alle Formulierungsbestandteile werden zusammengegeben und 20 min mittels eines Magnetrührers gerührt.

Die gebrauchsfähige Formulierung wird auf Stahlbleche, (Bonder Bleche 1303) in einer Schichtdicke von 20-25 µm aufgerakelt und nachfolgend unter im Falle 1 und 2* einer UV-Lampe (3 m/min, Minicure, Quecksilberdampflampe, 80 W/cm, Technigraf) ausgehärtet. Im Falle 3 und 4 erfolgt die Aushärtung unter Elektronenstrahlen (ESH, 10 Mrad, Gerät der Fa. ESI), da keine Photoinitiatoren enthalten sind.

Danach erfolgt in allen Fällen die thermische Aushärtung in einem Umluftofen bei 150 °C (30 min). Im Falle b) erfolgt die thermische Aushärtung ohne vorherige Strahlenhärtung.

| **Versuch 1** | **als) UV + 30 min 150 °C** | **1b) 30 min 150 °C** |
|---|---|---|
| Erichsen-Tiefung [mm] | 8,5 | 9,0 |
| Kugelschlag (dir./rev.) [inch x lbs] | > 80 / > 80 | 60 / 40 |
| MEK-Test [Doppelhübe] | > 100 | 38 |
| Klebfreiheit | ja | ja |

| **Versuch 2*** | **2a) UV + 30 min 150 °C** | **2b) 30 min 150 °C** |
|---|---|---|
| Erichsen-Tiefung [mm] | 9,0 | 9,0 |
| Kugelschlag (dir./rev.) [inch x lbs] | 30 / < 10 | 20 / < 10 |
| MEK-Test [Doppelhübe] | 57 | 2 |
| Klebfreiheit | ja | nein |

| **Versuch 3** | **3a) ESH + 30 min 150 °C** | **3b) 30 min 150 °C** |
|---|---|---|
| Erichsen-Tiefung [mm] | 9,5 | 10,0 |
| Kugelschlag (dir./rev.) [inch x lbs] | > 80 /> 80 | > 80 / > 80 |
| MEK-Test [Doppelhübe] | > 100 | 23 |
| Klebfreiheit | ja | ja |

| | | |
|---|---|---|
| *nicht erfindungsgemäße Vergleichsbeispiele | | |

| **Versuch 4*** | **4a) UV + 30 min 150 °C** | **4b) 30 min 150 °C** |
|---|---|---|
| Erichsen-Tiefung [mm] | 10,0 | 9,0 |
| Kugelschlag (dir./rev.) [inch x lbs] | 50 / < 10 | 50 / < 10 |
| MEK-Test [Doppelhübe] | 70 | 1 |
| Klebfreiheit | ja | nein |

| | | |
|---|---|---|
| *nicht erfindungsgemäße Vergleichsbeispiele | | |

| **Versuch 5** | **5a) ESH + 30 min 150 °C** | **5b) 30 min 150 °C** |
|---|---|---|
| Erichsen-Tiefung [mm] | 10,0 | 10,0 |
| Kugelschlag (dir./rev.) [inch x lbs] | > 80 / > 80 | > 80 / > 80 |
| MEK-Test [Doppelhübe] | > 100 | 34 |
| Klebfreiheit | ja | ja |

| | | |
|---|---|---|
| Erichsen-Tiefung nach DIN 53156, Kugelschlag nach ASTM D 2794-93 1 inch × lbs = 0,0115 m × kg | | |

Die erfindungsgemäßen Formulierungen sind den nicht erfindungsgemäßen Formulierungen in allen Lackdaten überlegen. Vor allem zeigt die erfindungsgemäße Formulierung nach thermischer Härtung auch ohne vorherige Strahlenhärtung ein Mindestmaß an Lackeigenschaften: Klebfreiheit, Flexibilität (Erichsentiefung > 7 mm) und Chemikalienbeständigkeit (MEK-Test > 20 Doppelhübe).

## Patentansprüche

1. Thermisch und Strahlen härtbare Formulierungen aus
A) mindestens 5 Gew.-% mindestens einer Strahlen härtbaren Komponente, wobei diese auch OH-Gruppen enthalten kann,
B) 10 bis 90 Gew.-% mindestens einer Uretdiongruppen haltigen Komponente, wobei diese auch OH-Gruppen und/ oder Strahlen härtbare Gruppen enthält,
C) 0,1 bis 5 Gew.-% mindestens einem Tetralkylammoniumsalz und/oder Phosphoniumsalz mit Halogenen, Hydroxiden, Alkoholaten oder organischen oder anorganischen Säureanionen als Gegenion,
und
0,1 bis 5 Gew.-% mindestens einem Co-Katalysator, ausgewählt aus
C1) mindestens einem Epoxid
und/oder
C2) mindestens einem Metallacetylacetonat.

2. Thermisch und Strahlen härtbare Formulierungen nach Anspruch 1,
**dadurch gekennzeichnet,**
**dass** diese zusätzlich mindestens eine der folgenden Komponenten, allein oder in Mischungen enthalten:
D) 0,1 bis 10 Gew.-% mindestens eines Haftvermittlers,
E) 0,2 bis 10 Gew.-% mindestens eines Photoinitiators
F) 0,1 bis 10 Gew.-% mindestens einer Säure,
G) 1 bis 40 Gew.-% hydroxylgruppenhaltiger Oligomere und/oder Polymere und/oder Monomere,
H) 0,01 bis 50 Gew.-% mindestens eines Pigments und/oder sonstige Zuschlagstoffe,
I) 1 bis 70 Gew.-% mindestens eines Lösemittels.

3. Thermisch und Strahlen härtbare Formulierungen nach mindestens einem der vorherigen Ansprüche,
**dadurch gekennzeichnet,**
**dass** als Komponente A) Epoxyacrylate, Polyesteracrylate, Polyetheracrylate, Polyacrylatacrylate, und Urethanacrylate und/oder Polyesterurethanacrylate, allein oder in Mischungen enthalten sind, bevorzugt Polyesterurethanacrylate.

4. Thermisch und Strahlen härtbare Formulierungen nach mindestens einem der vorherigen Ansprüche,
**dadurch gekennzeichnet,**
**dass** als Komponente A) Reaktiwerdünner enthalten sind, wie z. B. Isobornylacrylat, Hydroxypropylmethacrylat, Trimethylolpropanmonoformalacrylat, Tetrahydrofurfurylacrylat, Phenoxyethylacrylat Trimethylenpropantriacrylat, Dipropylenglycoldiacrylat, Tripropylenglycoldiacrylat, Hexandioldiacrylat, Pentaerythrittetraacrylat, Laurylacrylat, sowie propoxilierte oder ethoxilierte Varianten dieser Reaktiwerdünner, und/oder urethanisierte Reaktivverdünner, Vinylether, oder Allylether, bevorzugt Isobornylacrylat und/oder Trimethylolpropanmonoformalacrylat.

5. Thermisch und Strahlen härtbare Formulierungen nach mindestens einem der vorherigen Ansprüche,
**dadurch gekennzeichnet,**
**dass** Uretdiongruppen aufweisende Komponenten B) auf Basis von Isophorondiisocyanat (IPDI), Hexamethylendiisocyanat (HDI), 2,2'-Dicyclohexylmethandiisocyanat/ 2,4'-Dicyclohexylmethandiisocyanat/ 4,4'-Dicyclohexylmethandiisocyanat (H₁₂MDI), 2-Methylpentadiisocyanat (MPDI), 2,2,4-Trimethylhexamethylendiisocyanat/2,4,4-Trimethylhexamethylendiisocyanat (TMDI), Norbornandiisocyanat (NBDI), Methylendiphenyldiisocyanat (MDI), Toluidindiisocyanat (TDI) und Tetramethylxylylendiisocyanat (TMXDI), allein oder in Mischungen, enthalten sind, insbesondere Uretdiongruppen aufweisende Komponenten B) auf Basis von IPDI, 4,4'-H₁₂MDI und/oder HDI.

6. Thermisch und Strahlen härtbare Formulierungen nach mindestens einem der vorherigen Ansprüche,
**dadurch gekennzeichnet,**
**dass** Uretdiongruppen aufweisende Komponenten B) auf Basis hydroxylgruppenhaltiger Polyester, Polythioether, Polyether, Polycaprolactone, Polyepoxide, Polyesteramide, Polyurethane, niedermolekularer Di-, Tri- und/oder Tetraalkohole, Monoamine und/oder Monoalkohole, allein oder in Mischungen, enthalten sind, insbesondere Polyester und/oder monomere Dialkohole.

7. Thermisch und Strahlen härtbare Formulierungen nach mindestens einem der vorherigen Ansprüche,
**dadurch gekennzeichnet,**
**dass** die Uretdiongruppen aufweisende Komponenten B) einen freien NCO-Gehalt von weniger als 5 Gew.-% und einen Gehalt an Uretdiongruppen von 6 bis 25 Gew.-% (berechnet als C₂N₂O₂, Molekulargewicht 84) aufweisen.

8. Thermisch und Strahlen härtbare Formulierungen nach mindestens einem der vorherigen Ansprüche,
**dadurch gekennzeichnet,**
**dass** als Komponente C) Tetramethylammoniumformiat, Tetramethylammoniumacetat, Tetramethylammoniumpropionat, Tetramethylammoniumbutyrat, Tetramethylammoniumbenzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat, Tetrabutylammoniumformiat, Tetrabutylammoniumacetat, Tetrabutylammoniumpropionat, Tetrabutylammoniumbutyrat und Tetrabutylammoniumbenzoat und Tetrabutylphosphoniumacetat, Tetrabutylphosphoniumformiat und Ethyltriphenylphosphoniumacetat, Tetrabutylphosphoniumbenzotriazolat, Tetraphenylphosphoniumphenolat und Trihexyltetradecylphosphoniumdecanoat, Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid,
Tetrahexylammoniumhydroxid, Tetraoctylammoniumhydroxid, Tetradecylammoniumhydroxid, Tetradecyltrihexylammoniumhydroxid, Tetraoctadecylammoniumhydroxid, Benzyltrimethylammoniumhydroxid, Benzyltriethylammoniumhydroxid, Trimethylphenylammoniumhydroxid, Triethylmethylammoniumhydroxid, Tri-methylvinylammoniumhydroxid, Methyltributylammoniummethanolat, Methyltriethylammoniummethanolat, Tetramethylammoniummethanolat, Tetraethylammoniummethanolat, Tetrapropylammoniummethanolat, Tetrabutylammoniummethanolat, Tetrapentylammoniummethanolat, Tetrahexylammoniummethanolat, Tetraoctylammoniummethanolat, Tetradecylammoniummethanolat, Tetradecyltrihexylammoniummethanolat, Tetraoctadecylammoniummethanolat, Benzyltrimethylammoniummethanolat, Benzyltriethylammoniummethanolat, Trimethylphenylammoniummethanolat, Triethylmethylammoniummethanolat, Trimethylvinylammoniummethanolat, Methyltributylammoniumethanolat, Methyltriethylammoniumethanolat, Tetramethylammoniumethanolat, Tetraethylammoniumethanolat, Tetrapropylammoniumethanolat, Tetrabutylammoniumethanolat, Tetrapentylammoniumethanolat, Tetrahexylammoniumethanolat, Tetraoctylammoniummethanolat, Tetradecylammoniumethanolat, Tetradecyltrihexylammoniumethanolat, Tetraoctadecylammoniumethanolat, Benzyltrimethylammoniumethanolat, Benzyltriethylammoniumethanolat, Trimethylphenylammoniumethanolat, Triethylmethylammoniumethanolat, Trimethylvinylammoniumethanolat, Methyltributylammoniumbenzylat, Methyltriethylammoniumbenzylat, Tetramethylammoniumbenzylat, Tetraethylammoniumbenzylat, Tetrapropylammoniumbenzylat, Tetrabutylammoniumbenzylat, Tetrapentylammoniumbenzylat, Tetrahexylammoniumbenzylat, Tetraoctylammoniumbenzylat, Tetradecylammoniumbenzylat, Tetradecyltrihexylammoniumbenzylat, Tetraoctadecylammoniumbenzylat, Benzyltrimethylammoniumbenzylat, Benzyltriethylammoniumbenzylat, Trimethylphenylammoniumbenzylat, Triethylmethylammoniumbenzylat, Trimethylvinylammoniumbenzylat, Tetramethylammoniumfluorid, Tetraethylammoniumfluorid, Tetrabutylammoniumfluorid, Tetraoctylammoniumfluorid, Benzyltrimethylammoniumfluorid, Tetrabutylphosphoniumhydroxid, Tetrabutylphosphoniumfluorid, Tetrabutylammoniumchlorid, Tetrabutylammoniumbromid, Tetrabutylammoniumiodid, Tetraethylammoniumchlorid, Tetraethylammoniumbromid, Tetraethylammoniumiodid, Tetramethylammoniumchlorid, Tetramethylammoniumbromid, Tetramethylammoniumiodid, Benzyltrimethylammoniumchlorid, Benzyltriethylammoniumchlorid, Benzyltripropylammoniumchlorid, Benzyltributylammoniumchlorid, Methyltributylammoniumchlorid, Methyltripropylammoniumchlorid, Methyltriethylammoniumchlorid, Methyltriphenylammoniumchlorid, Phenyltrimethylammoniumchlorid, Benzyltrimethylammoniumbromid, Benzyltriethylammoniumbromid, Benzyltripropylammoniumbromid, Benzyltributylammoniumbromid, Methyltributylammoniumbromid, Methyltripropylammoniumbromid, Methyltriethylammoniumbromid, Methyltriphenylammoniumbromid, Phenyltrimethylammoniumbromid, Benzyltrimethylammoniumiodid, Benzyltriethylammoniumiodid, Benzyltripropylammoniumiodid, Benzyltributylammoniumiodid, Methyltributylammoniumiodid, Methyltripropylammoniumiodid, Methyltriethylammoniumiodid, Methyltriphenylammoniumiodid und Phenyltrimethylammoniumiodid, Methyltributylammoniumhydroxid, Methyltriethylammoniumhydroxid, Tetramethylammoniumhydroxid, Tetraethyl-ammoniumhydroxid, Tetrapropylammoniumhydroxid, Tetrabutylammoniumhydroxid, Tetrapentylammoniumhydroxid, Tetrahexylammoniumhydroxid, Tetraoctylammonium-hydroxid, Tetradecylammoniumhydroxid, Tetradecyltrihexylammoniumhydroxid, Tetraoctadecylammoniumhydroxid Benzyltrimethylammoniumhydroxid, Benzyltriethylammoniumhydroxid, Trimethylphenylammoniumhydroxid, Triethylmethylammoniumhydroxid, Trimethylvinylammoniumhydroxid, Tetramethylammoniumfluorid, Tetraethylammoniumfluorid, Tetrabutylammoniumfluorid, Tetraoctylammoniumfluorid und Benzyltrimethylammoniumfluorid allein oder in Mischungen, enthalten sind, besonders bevorzugt Tetraethylammoniumbenzoat oder Tetrabutylammoniumhydroxid.

9. Thermisch und Strahlen härtbare Formulierungen nach mindestens einem der vorherigen Ansprüche,
**dadurch gekennzeichnet,**
**dass** als Komponente C1) Glycidylether und Glycidylester, aliphatische Epoxide, Diglycidylether auf Basis Bisphenol A und Glycidylmethacrylate enthalten sind.

10. Thermisch und Strahlen härtbare Formulierungen nach Anspruch 16,
**dadurch gekennzeichnet,**
**dass** Triglycidylisocyanurat, Gemische aus Terephthalsäurediglycidylester und Trimellitsäuretriglycidylester, Glycidylester der Versaticsäure, 3,4-Epoxycyclohexylmethyl-3',4'-epoxycyclohexancarboxylat (ECC), Diglycidylether auf Basis Bisphenol A, Ethylhexylglycidylether, Butylglycidylether, Pentaerythrittetraglycidylether, oder andere Polypoxtypen mit freien Epoxygruppen, allein oder in Mischungen enthalten sind.

11. Thermisch und Strahlen härtbare Formulierungen nach mindestens einem der vorherigen Ansprüche,
**dadurch gekennzeichnet,**
**dass** als Komponente C2) Zinkacetylacetonat, Lithiumacetylacetonat und Zinnacetylacetonat, allein oder in Mischungen enthalten sind.

12. Thermisch und Strahlen härtbare Formulierungen nach mindestens einem der vorherigen Ansprüche,
**dadurch gekennzeichnet,**
**dass** als Komponente D) Phosphorsäure und/oder Phosphonsäure und/oder deren Umsetzungsprodukte (z. B. Ester) mit funktionalisierten Acrylaten enthalten sind.

13. Thermisch und Strahlen härtbare Formulierungen nach mindestens einem der vorherigen Ansprüche,
**dadurch gekennzeichnet,**
**dass** als Komponente F) Schwefelsäure, Essigsäure, Benzoesäure, Malonsäure, Terephthalsäure, Phtalsäure, aber auch Copolyester oder Copolyamide mit einer Säurezahl von mindestens 20 enthalten sind.

14. Thermisch und Strahlen härtbare Formulierungen nach mindestens einem der vorherigen Ansprüche,
**dadurch gekennzeichnet,**
**dass** als Komponente G) Polyester, Polyacrylate, Polyurethane, Polyether und/oder Polycarbonate mit einer OH-Zahl von 20 bis 500 (in mg KOH/Gramm) und einer mittleren Molmasse von 250 bis 6000 g/mol enthalten sind, insbesondere Hydroxylgruppen haltige Polyester mit einer OH-Zahl von 20 bis 150 und einem mittleren Molekulargewicht von 500 bis 6000 g/mol.

15. Thermisch und Strahlen härtbare Formulierungen nach mindestens einem der vorherigen Ansprüche,
**dadurch gekennzeichnet,**
**dass** als Komponente G) Reaktionsprodukte von Polycarbonsäuren und Glycidverbindungen enthalten sind.

16. Thermisch und Strahlen härtbare Formulierungen nach mindestens einem der vorherigen Ansprüche,
**dadurch gekennzeichnet,**
**dass** als Komponente G) Mono-, Di- und/oder Polyole des Molekulargewichts von mindestens 32 g/mol enthalten sind.

17. Verfahren zur Herstellung von thermisch und Strahlen härtbaren Formulierungen nach mindestens einem der vorherigen Ansprüche 1 bis 16 aus
A) mindestens 5 Gew.-% mindestens einer Strahlen härtbaren Komponente, wobei diese auch OH-Gruppen enthalten kann,
B) 10 bis 90 Gew.-% mindestens einer Uretdiongruppen haltigen Komponente, wobei diese auch OH-Gruppen und/ oder Strahlen härtbare Gruppen enthält,
C) 0,1 bis 5 Gew.-% mindestens einem Tetralkylammoniumsalz und/oder Phosphoniumsalz mit Halogenen, Hydroxiden, Alkoholaten oder organischen oder anorganischen Säureanionen als Gegenion,
und
0,1 bis 5 Gew.-% mindestens einem Co-Katalysator, ausgewählt aus
C1) mindestens einem Epoxid
und/oder
C2) mindestens einem Metallacetylacetonat
durch Homogenisierung bei einer Temperaturobergrenze von 120 bis 130 °C.

18. Verwendung von thermisch und Strahlen härtbare Formulierungen nach mindestens einem der vorherigen Ansprüche 1 bis 17 aus
A) mindestens 5 Gew.-% mindestens einer Strahlen härtbaren Komponente, wobei diese auch OH-Gruppen enthalten kann,
B) 10 bis 90 Gew.-% mindestens einer Uretdiongruppen haltigen Komponente, wobei diese auch OH-Gruppen und/ oder Strahlen härtbare Gruppen enthält,
C) 0,1 bis 5 Gew.-% mindestens einem Tetralkylammoniumsalz und/oder Phosphoniumsalz mit Halogenen, Hydroxiden, Alkoholaten oder organischen oder anorganischen Säureanionen als Gegenion,
und
0,1 bis 5 Gew.-% mindestens einem Co-Katalysator, ausgewählt aus
C1) mindestens einem Epoxid
und/oder
C2) mindestens einem Metallacetylacetonat
als Beschichtungsmittel.

19. Beschichtungsmittel enthaltend thermisch und Strahlen härtbare Formulierungen nach mindestens einem der vorherigen Ansprüche 1 bis 17 aus
A) mindestens 5 Gew.-% mindestens einer Strahlen härtbaren Komponente, wobei diese auch OH-Gruppen enthalten kann,
B) 10 bis 90 Gew.-% mindestens einer Uretdiongruppen haltigen Komponente, wobei diese auch OH-Gruppen und/ oder Strahlen härtbare Gruppen enthält,
C) 0,1 bis 5 Gew.-% mindestens einem Tetralkylammoniumsalz und/oder Phosphoniumsalz mit Halogenen, Hydroxiden, Alkoholaten oder organischen oder anorganischen Säureanionen als Gegenion,
und
0,1 bis 5 Gew.-% mindestens einem Co-Katalysator, ausgewählt aus
C1) mindestens einem Epoxid
und/oder
C2) mindestens einem Metallacetylacetonat.

20. Metallbeschichtungszusammensetzung, Holzbeschichtungszusammensetzung, Lederbeschichtungszusammensetzung,
Kunststoffbeschichtungszusammensetzung oder Glasbeschichtungszusammensetzung im Wesentlichen enthaltend thermisch und Strahlen härtbare Formulierungen aus
A) mindestens 5 Gew.-% mindestens einer Strahlen härtbaren Komponente, wobei diese auch OH-Gruppen enthalten kann,
B) 10 bis 90 Gew.-% mindestens einer Uretdiongruppen haltigen Komponente, wobei diese auch OH-Gruppen und/ oder Strahlen härtbare Gruppen enthält
C) 0,1 bis 5 Gew.-% mindestens einem Tetralkylammoniumsalz und/oder Phosphoniumsalz mit Halogenen, Hydroxiden, Alkoholaten oder organischen oder anorganischen Säureanionen als Gegenion,
und
0,1 bis 5 Gew.-% mindestens einem Co-Katalysator, ausgewählt aus
C1) mindestens einem Epoxid
und/oder
C2) mindestens einem Metallacetylacetonat.

## Claims

1. A thermally curable and radiation-curable formulation composed of
A) at least 5% by weight of at least one radiation-curable component, which can also contain OH groups,
B) from 10 to 90% by weight of at least one component containing uretdione groups, which also contains OH groups and/or radiation-curable groups,
C) from 0.1 to 5% by weight of at least one tetralkylammonium salt and/or phosphonium salt with halogens, hydroxides, alcoholates or organic or inorganic acid anions, as counter-ion,
and
from 0.1 to 5% by weight of at least one cocatalyst, selected from
C1) at least one epoxide
and/or
C2) at least one metal acetylacetonate.

2. A thermally curable and radiation-curable formulation according to claim 1,
**characterized in that**
this also comprises at least one of the following components, alone or in a mixture:
D) from 0.1 to 10% by weight of at least one adhesion promoter,
E) from 0.2 to 10% by weight of at least one photoinitiator,
F) from 0.1 to 10% by weight of at least one acid,
G) from 1 to 40% by weight of monomers and/or polymers and/or oligomers containing hydroxy groups,
H) from 0.01 to 50% by weight of at least one pigment and/or other additives,
I) from 1 to 70% by weight of at least one solvent.

3. A thermally curable and radiation-curable formulation according to at least one of the preceding claims,
**characterized in that**
the component A) present comprises epoxy acrylates, polyester acrylates, polyether acrylates, polyacrylate acrylates, and urethane acrylates and/or polyester urethane acrylates, alone or in a mixture, preferably polyester urethane acrylates.

4. A thermally curable and radiation-curable formulation according to at least one of the preceding claims,
**characterized in that**
the component A) present comprises reactive diluents, such as isobornyl acrylate, hydroxypropyl methacrylate, trimethylolpropane monoformal acrylate, tetrahydrofurfuryl acrylate, phenoxyethyl acrylate, trimethylenepropane triacrylate, dipropylene glycol diacrylate, tripropylene glycol diacrylate, hexanediol diacrylate, pentaerythritol tetraacrylate, lauryl acrylate, or else propoxylated or ethoxylated variants of these reactive diluents, and/or urethanized reactive diluents, vinyl ether, or allyl ether, preferably isobornyl acrylate and/or trimethylolpropane monoformal acrylate.

5. A thermally curable and radiation-curable formulation according to at least one of the preceding claims,
**characterized in that**
components B) having uretdione groups and based on isophorone diisocyanate (IPDI), hexamethylene diisocyanate (HDI), dicyclohexylmethane 2,2'-diisocyanate/dicyclohexylmethane 2,4'-diisocyanate/dicyclohexylmethane 4,4'-diisocyanate (H₁₂MDI), 2-methyl pentadiisocyanate (MPDI), trimethylhexamethylene 2,2,4-diisocyanate/trimethylhexamethylene 2,4,4-diisocyanate (TMDI), norbornane diisocyanate (NBDI), methylenediphenyl diisocyanate (MDI), toluidine diisocyanate (TDI) and tetramethylxylylene diisocyanate (TMXDI), alone or in a mixture, are present, in particular components B) having uretdione groups and based on IPDI, 4,4'-H₁₂MDI and/or HDI.

6. A thermally curable and radiation-curable formulation according to at least one of the preceding claims,
**characterized in that**
components B) having uretdione groups are present, based on, alone or in a mixture, monoalcohols and/or monoamines, tetra-, tri- and/or dialcohols of low molecular weight, polyurethanes, polyesteramides, polyepoxides, polycaprolactones, polyethers, polythioethers, polyesters containing hydroxy groups, in particular polyesters and/or monomeric dialcohols are present.

7. A thermally curable and radiation-curable formulation according to at least one of the preceding claims,
**characterized in that**
the components B) having uretdione groups have less than 5% by weight of free NCO content and from 6 to 25% by weight content of uretdione groups (calculated as C₂N₂O₂, molecular weight 84).

8. A thermally curable and radiation-curable formulation according to at least one of the preceding claims,
**characterized in that**
the component C) present comprises tetramethylammonium formate, tetramethylammonium acetate, tetramethylammonium propionate, tetramethylammonium butyrate, tetramethylammonium benzoate, tetraethylammonium formate, tetraethylammonium acetate, tetraethylammonium propionate, tetraethylammonium butyrate, tetraethylammonium benzoate, tetrapropylammonium formate, tetrapropylammonium acetate, tetrapropylammonium propionate, tetrapropylammonium butyrate, tetrapropylammonium benzoate, tetrabutylammonium formate, tetrabutylammonium acetate, tetrabutylammonium propionate, tetrabutylammonium butyrate and tetrabutylammonium benzoate and tetrabutylphosphonium acetate, tetrabutylphosphonium formate and ethyltriphenylphosphonium acetate, tetrabutylphosphonium benzotriazolate, tetraphenylphosphonium phenolate and trihexyltetradecylphosphonium decanoate, methyltributylammonium hydroxide, methyltriethylammonium hydroxide, tetramethylammonium hydroxide, tetraethylammonium hydroxide, tetrapropylammonium hydroxide, tetrabutylammonium hydroxide, tetrapentylammonium hydroxide, tetrahexylammonium hydroxide, tetraoctylammonium hydroxide, tetradecylammonium hydroxide, tetradecyltrihexylammonium hydroxide, tetraoctadecylammonium hydroxide, benzyltrimethylammonium hydroxide, benzyltriethylammonium hydroxide, trimethylphenylammonium hydroxide, triethylmethylammonium hydroxide, trimethylvinylammonium hydroxide, methyltributylammonium methanolate, methyltriethylammonium methanolate, tetramethylammonium methanolate, tetraethylammonium methanolate, tetrapropylammonium methanolate, tetrabutylammonium methanolate, tetrapentylammonium methanolate, tetrahexylammonium methanolate, tetraoctylammonium methanolate, tetradecylammonium methanolate, tetradecyltrihexylammonium methanolate, tetraoctadecylammonium methanolate, benzyltrimethylammonium methanolate, benzyltriethylammonium methanolate, trimethylphenylammonium methanolate, triethylmethylammonium methanolate, trimethylvinylammonium methanolate, methyltributylammonium ethanolate, methyltriethylammonium ethanolate, tetramethylammonium ethanolate, tetraethylammonium ethanolate, tetrapropylammonium ethanolate, tetrabutylammonium ethanolate, tetrapentylammonium ethanolate, tetrahexylammonium ethanolate, tetraoctylammonium methanolate, tetradecylammonium ethanolate, tetradecyltrihexylammonium ethanolate, tetraoctadecylammonium ethanolate, benzyltrimethylammonium ethanolate, benzyltriethylammonium ethanolate, trimethylphenylammonium ethanolate, triethylmethylammonium ethanolate, trimethylvinylammonium ethanolate, methyltributylammonium benzylate, methyltriethylammonium benzylate, tetramethylammonium benzylate, tetraethylammonium benzylate, tetrapropylammonium benzylate, tetrabutylammonium benzylate, tetrapentylammonium benzylate, tetrahexylammonium benzylate, tetraoctylammonium benzylate, tetradecylammonium benzylate, tetradecyltrihexylammonium benzylate, tetraoctadecylammonium benzylate, benzyltrimethylammonium benzylate, benzyltriethylammonium benzylate, trimethylphenylammonium benzylate, triethylmethylammonium benzylate, trimethylvinylammonium benzylate, tetramethylammonium fluoride, tetraethylammonium fluoride, tetrabutylammonium fluoride, tetraoctylammonium fluoride, benzyltrimethylammonium fluoride, tetrabutylphosphonium hydroxide, tetrabutylphosphonium fluoride, tetrabutylammonium chloride, tetrabutylammonium bromide, tetrabutylammonium iodide, tetraethylammonium chloride, tetraethylammonium bromide, tetraethylammonium iodide, tetramethylammonium chloride, tetramethylammonium bromide, tetramethylammonium iodide, benzyltrimethylammonium chloride, benzyltriethylammonium chloride, benzyltripropylammonium chloride, benzyltributylammonium chloride, methyltributylammonium chloride, methyltripropylammonium chloride, methyltriethylammonium chloride, methyltriphenylammonium chloride, phenyltrimethylammonium chloride, benzyltrimethylammonium bromide, benzyltriethylammonium bromide, benzyltripropylammonium bromide, benzyltributylammonium bromide, methyltributylammonium bromide, methyltripropylammonium bromide, methyltriethylammonium bromide, methyltriphenylammonium bromide, phenyltrimethylammonium bromide, benzyltrimethylammonium iodide, benzyltriethylammonium iodide, benzyltripropylammonium iodide, benzyltributylammonium iodide, methyltributylammonium iodide, methyltripropylammonium iodide, methyltriethylammonium iodide, methyltriphenylammonium iodide and phenyltrimethylammonium iodide, methyltributylammonium hydroxide, methyltriethylammonium hydroxide, tetramethylammonium hydroxide, tetraethylammonium hydroxide, tetrapropylammonium hydroxide, tetrabutylammonium hydroxide, tetrapentylammonium hydroxide, tetrahexylammonium hydroxide, tetraoctylammonium hydroxide, tetradecylammonium hydroxide, tetradecyltrihexylammonium hydroxide, tetraoctadecylammonium hydroxide benzyltrimethylammonium hydroxide, benzyltriethylammonium hydroxide, trimethylphenylammonium hydroxide, triethylmethylammonium hydroxide, trimethylvinylammonium hydroxide, tetramethylammonium fluoride, tetraethylammonium fluoride, tetrabutylammonium fluoride, tetraoctylammonium fluoride and benzyltrimethylammonium fluoride, alone or in a mixture, particularly preferably tetraethylammonium benzoate or tetrabutylammonium hydroxide.

9. A thermally curable and radiation-curable formulation according to at least one of the preceding claims,
**characterized in that**
the component C1) present comprises glycidyl ethers and glycidyl esters, aliphatic epoxides, diglycidyl ethers based on bisphenol A and glycidyl methacrylates.

10. A thermally curable and radiation-curable formulation according to claim 16,
**characterized in that**
triglycidyl isocyanurate, a mixture composed of diglycidyl terephthalate and triglycidyl trimellitate, glycidyl ester of Versatic acid, 3,4-epoxycyclohexylmethyl 3',4'-epoxycyclohexanecarboxylate (ECC), diglycidyl ether based on bisphenol A, ethylhexyl glycidyl ether, butyl glycidyl ether, pentaerythritol tetraglycidyl ether, or other Polypox grades having free epoxy groups are present, alone or in a mixture.

11. A thermally curable and radiation-curable formulation according to at least one of the preceding claims,
**characterized in that**
the component C2) present comprises zinc acetylacetonate, lithium acetylacetonate and tin acetylacetonate, alone or in a mixture.

12. A thermally curable and radiation-curable formulation according to at least one of the preceding claims,
**characterized in that**
the component D) present comprises phosphoric acid and/or phosphonic acid and/or reaction products thereof (e.g. esters) with functionalized acrylates.

13. A thermally curable and radiation-curable formulation according to at least one of the preceding claims,
**characterized in that**
the component F) present comprises sulphuric acid, acetic acid, benzoic acid, malonic acid, terephthalic acid, phthalic acid, or else copolyesters or copolyamides whose acid number is at least 20.

14. A thermally curable and radiation-curable formulation according to at least one of the preceding claims,
**characterized in that**
the component G) present comprises polyesters, polyacrylates, polyurethanes, polyethers and/or polycarbonates whose OH number is from 20 to 500 (in mg KOH/gram) and whose average molar mass is from 250 to 6000 g/mol, in particular polyesters which comprise hydroxy groups and whose OH number is from 20 to 150 and whose average molar mass is from 500 to 6000 g/mol.

15. A thermally curable and radiation-curable formulation according to at least one of the preceding claims,
**characterized in that**
the component G) present comprises reaction products of polycarboxylic acids and glycidic compounds.

16. A thermally curable and radiation-curable formulation according to at least one of the preceding claims,
**characterized in that**
the component G) present comprises mono-, di- and/or polyols whose molar mass is at least 32 g/mol.

17. A process for the production of thermally curable and radiation-curable formulations according to at least one of the preceding claims 1 to 16, composed of
A) at least 5% by weight of at least one radiation-curable component, which can also contain OH groups,
B) from 10 to 90% by weight of at least one component containing uretdione groups, which also contains OH groups and/or radiation-curable groups,
C) from 0.1 to 5% by weight of at least one tetralkylammonium salt and/or phosphonium salt with halogens, hydroxides, alcoholates or organic or inorganic acid anions, as counter-ion,
and
from 0.1 to 5% by weight of at least one cocatalyst, selected from
C1) at least one epoxide
and/or
C2) at least one metal acetylacetonate,
by homogenization at an upper temperature limit of from 120 to 130°C.

18. The use, as coating composition, of thermally curable and radiation-curable formulations according to at least one of the preceding claims 1 to 17, composed of
A) at least 5% by weight of at least one radiation-curable component, which can also contain OH groups,
B) from 10 to 90% by weight of at least one component containing uretdione groups, which also contains OH groups and/or radiation-curable groups,
C) from 0.1 to 5% by weight of at least one tetralkylammonium salt and/or phosphonium salt with halogens, hydroxides, alcoholates or organic or inorganic acid anions, as counter-ion,
and
from 0.1 to 5% by weight of at least one cocatalyst, selected from
C1) at least one epoxide
and/or
C2) at least one metal acetylacetonate.

19. A coating composition comprising thermally curable and radiation-curable formulations according to at least one of the preceding claims 1 to 17, composed of
A) at least 5% by weight of at least one radiation-curable component, which can also contain OH groups,
B) from 10 to 90% by weight of at least one component containing uretdione groups, which also contains OH groups and/or radiation-curable groups,
C) from 0.1 to 5% by weight of at least one tetralkylammonium salt and/or phosphonium salt with halogens, hydroxides, alcoholates or organic or inorganic acid anions, as counter-ion,
and
from 0.1 to 5% by weight of at least one cocatalyst, selected from
Cl) at least one epoxide
and/or
C2) at least one metal acetylacetonate.

20. A metal-coating composition, wood-coating composition, leather-coating composition, plastic-coating composition or glass-coating composition, in essence comprising thermally curable and radiation-curable formulations composed of
A) at least 5% by weight of at least one radiation-curable component, which can also contain OH groups,
B) from 10 to 90% by weight of at least one component containing uretdione groups, which also contains OH groups and/or radiation-curable groups,
C) from 0.1 to 5% by weight of at least one tetralkylammonium salt and/or phosphonium salt with halogens, hydroxides, alcoholates or organic or inorganic acid anions, as counter-ion,
and
from 0.1 to 5% by weight of at least one cocatalyst, selected from
Cl) at least one epoxide
and/or
C2) at least one metal acetylacetonate.

## Revendications

1. Compositions durcissables thermiquement et par irradiation, à base
A) d'au moins 5 % en poids d'au moins un composant durcissable par irradiation, ce dernier pouvant également contenir des groupes OH,
B) de 10 à 90 % en poids d'au moins un composant contenant des groupes urétdione, ce dernier pouvant également contenir des groupes OH et/ou des groupes durcissables par irradiation,
C) de 0,1 à 5 % en poids d'au moins un sel de tétraalkylammonium et/ou sel de phosphonium avec des halogènes, hydroxydes, alcoolates ou anions d'acides organiques ou inorganiques en tant qu'ion opposé,
et
de 0,1 à 5 % en poids d'au moins un co-catalyseur, choisi parmi
C1) au moins un époxyde
et/ou
C2) au moins un acétylacétonate métallique.

2. Compositions durcissables thermiquement et par irradiation selon la revendication 1,
**caractérisées en ce**
**qu'**en outre elles contiennent au moins l'un des composants suivants, seuls ou en mélanges :
D) 0,1 à 10 % en poids d'au moins un promoteur d'adhérence,
E) 0,2 à 10 % en poids d'au moins un photoamorceur
F) 0,1 à 10 % en poids d'au moins un acide,
G) 1 à 40 % en poids d'oligomères et/ou de polymères et/ou de monomères contenant des groupes hydroxy,
H) 0,01 à 50 % en poids d'au moins un pigment et/ou d'autres additifs,
I) 1 à 70 % en poids d'au moins un solvant.

3. Compositions durcissables thermiquement et par irradiation selon au moins l'une quelconque des revendications précédentes,
**caractérisées en ce que**
sont contenus en tant que composant A) des époxyacrylates, polyesteracrylates, polyétheracrylates, polyacrylate-acrylates, et uréthane-acrylates et/ou polyesteruréthane-acrylates, seuls ou en mélanges, de préférence des polyesteruréthane-acrylates.

4. Compositions durcissables thermiquement et par irradiation selon au moins l'une quelconque des revendications précédentes,
**caractérisées en ce que**
sont contenus en tant que composant A) des diluants réactifs, comme par exemple l'acrylate d'isobornyle, le méthacrylate d'hydroxypropyle, le monoformalacrylate de triméthylolpropane, l'acrylate de tétrahydrofurfuryle, l'acrylate de phénoxyéthyle, le triacrylate de triméthylènepropane, le diacrylate de dipropylèneglycol, le diacrylate de tripropylèneglycol, le diacrylate d'hexanediol, le tétraacrylate de pentaérythritol, l'acrylate de lauryle, ainsi que des variantes propoxylées ou éthoxylées de ces diluants réactifs, et/ou des diluants réactifs uréthanisés, des éthers vinyliques, ou des éthers allyliques, ou des éthers allyliques, de préférence l'acrylate d'isobornyle et/ou le monoformalacrylate de triméthylolpropane.

5. Compositions durcissables thermiquement et par irradiation selon au moins l'une quelconque des revendications précédentes,
**caractérisées en ce que**
sont contenus des composants B) comportant des groupes urétdione, à base d'isophorone-diisocyanate (IPDI), d'hexaméthylènediisocyanate (HDI), de 2,2'-dicyclohexyl-méthanediisocyanate/2,4'-dicyclohexylméthane-diisocyanate/4,4'-dicyclohexylméthanediisocyanate (H₁₂MDI), 2-méthylpentadiisocyanate (MPDI), 2,2,4-triméthylhexaméthylènediisocyanate/2,4,4-triméthylhexaméthylènediisocyanate (TMDI), norbornanediisocyanate (NBDI), méthylènediphényldiisocyanate (MDI), toluidinediisocyanate (TDI) et tétraméthylxylylènediisocyanate (TMXDI), seuls ou en mélanges, en particulier des composants B) comportant des groupes urétdione, à base d'IPDI, de 4,4'-H₁₂MDI et/ou de HDI.

6. Compositions durcissables thermiquement et par irradiation selon au moins l'une quelconque des revendications précédentes,
**caractérisées en ce que**
sont contenus des composants B) comportant des groupes urétdione, à base de polyesters, polythioéthers, polyéthers, polycaprolactones, polyépoxydes, polyesteramides, polyuréthanes, di-, tri- et/ou tétra-alcools de faible masse moléculaire, monoamines et/ou monoalcools, contenant des groupes hydroxy ; seuls ou en mélanges ; en particulier des polyesters et/ou des dialcools monomères.

7. Compositions durcissables thermiquement et par irradiation selon au moins l'une quelconque des revendications précédentes,
**caractérisées en ce que**
les composants B) contenant des groupes urétdione présentent une teneur en groupes NCO libres de moins de 5 % en poids et une teneur en groupes urétdione de 6 à 25 % en poids (calculée en tant que C₂N₂O₂, masse moléculaire 84).

8. Compositions durcissables thermiquement et par irradiation selon au moins l'une quelconque des revendications précédentes,
**caractérisées en ce que**
sont contenus en tant que composant C) du formiate de tétraméthylammonium, de l'acétate de tétraméthylammonium, du propionate de tétraméthylammonium, du butyrate de tétraméthylammonium, du benzoate de tétraméthylammonium, du formiate de tétraéthylammonium, de l'acétate de tétraéthylammonium, du propionate de tétraéthylammonium, du butyrate de tétraéthylammonium, du benzoate de tétraéthylammonium, du formiate de tétrapropylammonium, de l'acétate de tétrapropyl-ammonium, du propionate de tétrapropylammonium, du butyrate de tétrapropylammonium, du benzoate de tétrapropylammonium, du formiate de tétrabutylammonium, de l'acétate de tétrabutylammonium, du propionate de tétrabutylammonium, du butyrate de tétrabutylammonium et du benzoate de tétrabutylammonium et de l'acétate de tétrabutylphosphonium, du formiate de tétrabutylphosphonium et de l'acétate d'éthyltriphényl-phosphonium, du benzotriazolate de tétrabutylphosphonium, du phénolate de tétraphénylphosphonium et du décanoate de trihexyltétradécylphosphonium, de l'hydroxyde de méthyltributylammonium, de l'hydroxyde de méthyltriéthylammonium, de l'hydroxyde de tétraméthylammonium, de l'hydroxyde de tétraéthyl-ammonium, de l'hydroxyde de tétrapropylammonium, de l'hydroxyde de tétrabutylammonium, de l'hydroxyde de tétrapentylammonium, de l'hydroxyde de tétrahexylammonium, de l'hydroxyde de tétraoctylammonium, de l'hydroxyde de tétradécylammonium, de l'hydroxyde de tétradécyltrihexylammonium, de l'hydroxyde de tétraoctadécylammonium, de l'hydroxyde de benzyltriméthylammonium, de l'hydroxyde de benzyltriéthylammonium, de l'hydroxyde de triméthylphénylammonium, de l'hydroxyde de triéthylméthylammonium, de l'hydroxyde de triméthylvinylammonium, du méthanolate de méthyltributylammonium, du méthanolate de méthyltriéthylammonium, du méthanolate de tétraméthylammonium, du méthanolate de tétraéthylammonium, du méthanolate de tétrapropyl-ammonium, du méthanolate de tétrabutylammonium, du méthanolate de tétrapentylammonium, du méthanolate de tétrahexylammonium, du méthanolate de tétraoctylammonium, du méthanolate de tétradécylammonium, du méthanolate de tétradécyltrihexylammonium, du méthanolate de tétraoctadécylammonium, du méthanolate de benzyltriméthylammonium, du méthanolate de benzyltriéthylammonium, du méthanolate de triméthylphénylammonium, du méthanolate de triéthylméthylammonium, du méthanolate de triméthylvinylammonium, de l'éthanolate de méthyltributylammonium, de l'éthanolate de méthyltriéthylammonium, de l'éthanolate de tétraméthylammonium, de l'éthanolate de tétraéthylammonium, de l'éthanolate de tétrapropylammonium, de l'éthanolate de tétrabutylammonium, de l'éthanolate de tétrapentylammonium, de l'éthanolate de tétrahexylammonium, du méthanolate de tétraoctylammonium, de l'éthanolate de tétradécylammonium, de l'éthanolate de tétradécyltrihexylammonium, de l'éthanolate de tétraoctadécylammonium, de l'éthanolate de benzyltriméthylammonium, de l'éthanolate de benzyltriéthylammonium, de l'éthanolate de triméthylphénylammonium, de l'éthanolate de triéthylméthylammonium, de l'éthanolate de triméthylvinylammonium, du benzylate de méthyltributylammonium, du benzylate de méthyltriéthylammonium, du benzylate de tétraméthylammonium, du benzylate de tétraéthylammonium, du benzylate de tétrapropylammonium, du benzylate de tétrabutyl-ammonium, du benzylate de tétrapentylammonium, du benzylate de tétrahexylammonium, du benzylate de tétraoctylammonium, du benzylate de tétradécylammonium, du benzylate de tétradécyltrihexylammonium, du benzylate de tétraoctadécylammonium, du benzylate de benzyltriméthylammonium, du benzylate de benzyltriéthylammonium, du benzylate de triméthylphénylammonium, du benzylate de triéthylméthylammonium, du benzylate de triméthylvinylammonium, du fluorure de tétraméthylammonium, du fluorure de tétraéthylammonium, du fluorure de tétrabutylammonium, du fluorure de tétraoctylammonium, du fluorure de benzyltriméthylammonium, de l'hydroxyde de tétrabutylphosphonium, du fluorure de tétrabutylphosphonium, du chlorure de tétrabutylammonium, du bromure de tétrabutylammonium, de l'iodure de tétrabutylammonium, du chlorure de tétraéthylammonium, du bromure de tétraéthylammonium, de l'iodure de tétraéthylammonium, du chlorure de tétraméthylammonium, du bromure de tétraméthylammonium, de l'iodure de tétraméthylammonium, du chlorure de benzyltriméthylammonium, du chlorure de benzyltriéthylammonium, du chlorure de benzyltripropylammonium, du chlorure de benzyltributylammonium, du chlorure de méthyltributylammonium, du chlorure de méthyltripropylammonium, du chlorure de méthyltriéthylammonium, du chlorure de méthyltriphénylammonium, du chlorure de phényltriméthylammonium, du bromure de benzyltriméthylammonium, du bromure de benzyltriéthylammonium, du bromure de benzyltripropylammonium, du bromure de benzyltributylammonium, du bromure de méthyltributylammonium, du bromure de méthyltripropylammonium, du bromure de méthyltriéthylammonium, du bromure de méthyltriphénylammonium, du bromure de phényltriméthylammonium, de l'iodure de benzyltriméthylammonium, de l'iodure de benzyltriéthylammonium, de l'iodure de benzyltripropylammonium, de l'iodure de benzyltributylammonium, de l'iodure de méthyltributylammonium, de l'iodure de méthyltripropylammonium, de l'iodure de méthyltriéthylammonium, de l'iodure de méthyltriphénylammonium et de l'iodure de phényltriméthylammonium, de l'hydroxyde de méthyltributylammonium, de l'hydroxyde de méthyltriéthylammonium, de l'hydroxyde de tétraméthylammonium, de l'hydroxyde de tétraéthyl-ammonium, de l'hydroxyde de tétrapropylammonium, de l'hydroxyde de tétrabutylammonium, de l'hydroxyde de tétrapentylammonium, de l'hydroxyde de tétrahexylammonium, de l'hydroxyde de tétraoctylammonium, de l'hydroxyde de tétradécylammonium, de l'hydroxyde de tétradécyltrihexylammonium, de l'hydroxyde de tétraoctadécylammonium, de l'hydroxyde de benzyltriméthylammonium, de l'hydroxyde de benzyltriéthylammonium, de l'hydroxyde de triméthylphénylammonium, de l'hydroxyde de triéthylméthylammonium, de l'hydroxyde de triméthylvinylammonium, du fluorure de tétraméthylammonium, du fluorure de tétraéthylammonium, du fluorure de tétrabutylammonium, du fluorure de tétraoctylammonium et du fluorure de benzyltriméthylammonium seuls ou en mélanges, de façon particulièrement préférée du benzoate de tétraéthylammonium ou de l'hydroxyde de tétrabutylammonium.

9. Compositions durcissables thermiquement et par irradiation selon au moins l'une quelconque des revendications précédentes,
**caractérisées en ce que**
sont contenus en tant que composant C1) des éthers glycidyliques et esters glycidyliques, des époxydes aliphatiques, des éthers diglycidyliques à base de bisphénol A et des méthacrylates de glycidyle.

10. Compositions durcissables thermiquement et par irradiation selon la revendication 16,
**caractérisées en ce que**
sont contenus de l'isocyanurate de triglycidyle, des mélanges de téréphtalate de diglycidyle et trimellitate de triglycidyle, des esters glycidyliques de l'acide versatique, du 3',4'-époxycyclohexanecarboxylate de 3,4-époxycyclohexylméthyle (ECC), des éthers diglycidyliques à base de bisphénol A, de l'éthylhexylglycidyléther, du butylglycidyléther, de l'éther tétraglycidylique de pentaérythritol, ou d'autres types de POLYPOX à groupes époxy libres, seuls ou en mélanges.

11. Compositions durcissables thermiquement et par irradiation selon au moins l'une quelconque des revendications précédentes,
**caractérisées en ce que**
sont contenus en tant que composant C2) de l'acétylacétonate de zinc, de l'acétylacétonate de lithium et de l'acétylacétonate d'étain, seuls ou en mélanges.

12. Compositions durcissables thermiquement et par irradiation selon au moins l'une quelconque des revendications précédentes,
**caractérisées en ce que**
sont contenus en tant que composant D) de l'acide phosphorique et/ou de l'acide phosphonique et/ou leurs produits de réaction (par exemple des esters) avec des acrylates fonctionnalisés.

13. Compositions durcissables thermiquement et par irradiation selon au moins l'une quelconque des revendications précédentes,
**caractérisées en ce que**
sont contenus en tant que composant F) de l'acide sulfurique, de l'acide acétique, de l'acide benzoïque, de l'acide malonique, de l'acide téréphtalique, de l'acide phtalique, ou bien des copolyesters ou copolyamides ayant un indice d'acide d'au moins 20.

14. Compositions durcissables thermiquement et par irradiation selon au moins l'une quelconque des revendications précédentes,
**caractérisées en ce que**
sont contenus en tant que composant G) des polyesters, polyacrylates, polyuréthanes, polyéthers et/ou polycarbonates ayant un indice de groupes OH de 20 à 500 (en mg de KOH/gramme) et une masse moléculaire moyenne de 250 à 6 000 g/mole, en particulier des polyesters contenant des groupes hydroxy, ayant un indice de groupes OH de 20 à 150 et une masse moléculaire moyenne de 500 à 6 000 g/mole.

15. Compositions durcissables thermiquement et par irradiation selon au moins l'une quelconque des revendications précédentes,
**caractérisées en ce que**
sont contenus en tant que composant G) des produits de réaction d'acides polycarboxyliques et de composés glycidiques.

16. Compositions durcissables thermiquement et par irradiation selon au moins l'une quelconque des revendications précédentes,
**caractérisées en ce que**
sont contenus en tant que composant G) des mono-, di- et/ou polyols ayant une masse moléculaire d'au moins 32 g/mole.

17. Procédé pour la préparation de compositions durcissables thermiquement et par irradiation selon au moins l'une quelconque des revendications 1 à 16, à partir de
A) au moins 5 % en poids d'au moins un composant durcissable par irradiation, ce dernier pouvant également contenir des groupes OH,
B) 10 à 90 % en poids d'au moins un composant contenant des groupes urétdione, ce dernier pouvant également contenir des groupes OH et/ou des groupes durcissables par irradiation,
C) 0,1 à 5 % en poids d'au moins un sel de tétraalkylammonium et/ou sel de phosphonium avec des halogènes, hydroxydes, alcoolates ou anions d'acides organiques ou inorganiques en tant qu'ion opposé,
et
0,1 à 5 % en poids d'au moins un co-catalyseur, choisi parmi
C1) au moins un époxyde
et/ou
C2) au moins un acétylacétonate métallique par homogénéisation à une limite supérieure de température de 120 à 130 °C.

18. Utilisation de compositions durcissables thermiquement et par irradiation selon au moins l'une quelconque des revendications précédentes 1 à 17, à base
A) d'au moins 5 % en poids d'au moins un composant durcissable par irradiation, ce dernier pouvant également contenir des groupes OH,
B) de 10 à 90 % en poids d'au moins un composant contenant des groupes urétdione, ce dernier pouvant également contenir des groupes OH et/ou des groupes durcissables par irradiation,
C) de 0,1 à 5 % en poids d'au moins un sel de tétraalkylammonium et/ou sel de phosphonium avec des halogènes, hydroxydes, alcoolates ou anions d'acides organiques ou inorganiques en tant qu'ion opposé,
et
de 0,1 à 5 % en poids d'au moins un co-catalyseur, choisi parmi
C1) au moins un époxyde
et/ou
C2) au moins un acétylacétonate métallique, en tant que produit de revêtement.

19. Produit de revêtement contenant des compositions durcissables thermiquement et par irradiation selon au moins l'une quelconque des revendications 1 à 17 précédentes, à base
A) d'au moins 5 % en poids d'au moins un composant durcissable par irradiation, ce dernier pouvant également contenir des groupes OH,
B) de 10 à 90 % en poids d'au moins un composant contenant des groupes urétdione, ce dernier pouvant également contenir des groupes OH et/ou des groupes durcissables par irradiation,
C) de 0,1 à 5 % en poids d'au moins un sel de tétraalkylammonium et/ou sel de phosphonium avec des halogènes, hydroxydes, alcoolates ou anions d'acides organiques ou inorganiques en tant qu'ion opposé,
et
de 0,1 à 5 % en poids d'au moins un co-catalyseur, choisi parmi
C1) au moins un époxyde
et/ou
C2) au moins un acétylacétonate métallique.

20. Composition de revêtement pour métaux, composition de revêtement pour bois, composition de revêtement pour cuir, composition de revêtement pour matières plastiques ou composition de revêtement pour verre, contenant essentiellement des compositions durcissables thermiquement et par irradiation, à base
A) d'au moins 5 % en poids d'au moins un composant durcissable par irradiation, ce dernier pouvant également contenir des groupes OH,
B) de 10 à 90 % en poids d'au moins un composant contenant des groupes urétdione, ce dernier pouvant également contenir des groupes OH et/ou des groupes durcissables par irradiation,
C) de 0,1 à 5 % en poids d'au moins un sel de tétraalkylammonium et/ou sel de phosphonium avec des halogènes, hydroxydes, alcoolates ou anions d'acides organiques ou inorganiques en tant qu'ion opposé,
et
de 0,1 à 5 % en poids d'au moins un co-catalyseur, choisi parmi
C1) au moins un époxyde
et/ou
C2) au moins un acétylacétonate métallique.
